(19) Europäisches Patentamt
European Patent Office
Office européen des brevets

(11) **EP 4 239 946 A1**

(12) **EUROPÄISCHE PATENTANMELDUNG**

(43) Veröffentlichungstag:
06.09.2023  Patentblatt 2023/36

(21) Anmeldenummer: 23155125.0

(22) Anmeldetag: 06.02.2023

(51) Internationale Patentklassifikation (IPC):
*H04L 9/08* (2006.01)

(52) Gemeinsame Patentklassifikation (CPC):
H04L 9/0852

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: 09.02.2022  DE 102022103012

(71) Anmelder: **Quantum Optics Jena GmbH**
**07745 Jena (DE)**

(72) Erfinder:
• **ZANNOTTI, Alessandro**
  **07743 Jena (DE)**
• **SANSA PERNA, Adrià**
  **07745 Jena (DE)**
• **DE VRIES, Oliver**
  **07745 Jena (DE)**

(74) Vertreter: **Louis Pöhlau Lohrentz**
**Patentanwälte**
**Merianstrasse 26**
**90409 Nürnberg (DE)**

(54) **VERFAHREN ZUM POLARISATIONSABGLEICH**

(57)     Vorgeschlagen wird ein Verfahren zum Polarisationsabgleich, vorzugsweise für und/oder bei optischer Kommunikation, Quantenkryptographie und/oder Quanteninformatik, umfassend eine Quelle 2 zur Erzeugung polarisationsverschränkter Photonenpaare und zwei Detektionsmodule (3, 4), wobei die Quelle 2 zur Übertragung der Photonen über jeweils einen Quantenkanal (5) mit den zwei Detektionsmodulen verbunden ist, und wobei jedes Detektionsmodul die Polarisation der Photonen in zwei nicht-orthogonalen Basen misst, und umfassend eine Polarisationskompensationseinheit (6) zum Polarisationsabgleich der Polarisationsänderung bei der Übertragung der Photonen über die Quantenkanäle, wobei die Polarisationskompensationseinheit (6) mehrere optische Komponenten aufweist. Wesentlich dabei ist, dass der Polarisationsabgleich durch einen Downhill-simplex Algorithmus und/oder durch einen deterministischen Algorithmus erfolgt.

*Fig. 1*

EP 4 239 946 A1

**Beschreibung**

Die Erfindung betrifft ein Verfahren zum Polarisationsabgleich nach den Merkmalen des Oberbegriffs des Anspruchs 1 und eine Vorrichtung zum Polarisationsabgleich nach den Merkmalen des Oberbegriffs des Anspruchs 14.

Bei optischer Kommunikation, Quantenkryptographie und/oder Quanteninformatik ist es wesentlich, dass die Quelle und ein oder mehrere Empfänger bei der Verwendung von polarisations-verschränkten Photonenpaaren die gleichen Polarisations-Messbasen, im Folgenden auch Basen genannt, verwenden. Allerdings erfolgt bei der Übertragung der Photonen in einem Medium durch Doppelbrechung, beispielsweise in einer Faser oder in der Atmosphäre, eine unbekannte Polarisationsdrehung, welche durch optische Komponenten zum Polarisationsabgleich ausgeglichen werden muss, um optische Kommunikation, Quantenkryptographie und/oder Quanteninformatik zu ermöglichen.

Verfahren und Vorrichtungen zum Polarisationsabgleich sind bereits bekannt, wobei zu den bekanntesten optischen Komponenten zum Polarisationsabgleich drehbare Wellenplättchen, Faser-Pressen (fiber-squeezer) oder Faser-Paddel (fiber-paddle) zählen. Um einen Polarisationsabgleich bei der Übertragung von Photonen in einer Faser durchzuführen, werden in bekannten Verfahren zwei nicht-orthogonale Basen, d.h. zwei entartete Basen, beispielsweise durch einen drehbaren Polarisator vorgegeben und diese beiden nicht-orthogonalen Basen und die Einstellungen der optischen Komponenten durch heuristische Justage-Verfahren (Versuch und Irrtum) ermittelt, unter welchen ein Polarisationsabgleich erhalten wird. Bei diesen heuristischen oder stochastischen Verfahren erfolgt die Justage bzw. der Polarisationsabgleich anhand zufälliger Änderung der Einstellungen der optischen Komponenten und Vergleich der dadurch erhaltenen Messwerte zu vorherigen Messwerten, wobei bei einer Verbesserung der Messwerte die Justage weiter in diese Richtung erfolgt und bei einer Verschlechterung der Messwerte die vorhergehende Justage-Position wieder hergestellt wird. Derartige Verfahren zur Justage sind zeitaufwändig und unpräzise, können aber durch einfache und kostengünstige optische Komponenten durchgeführt werden.

Der vorliegenden Erfindung liegt die Aufgabe zugrunde, ein verbessertes, präziseres und schnelleres Verfahren und eine entsprechende Vorrichtung zum Polarisationsabgleich bereitzustellen.

Die Aufgabe wird erfindungsgemäß durch ein Verfahren zum Polarisationsabgleich nach den Merkmalen des Anspruchs 1 gelöst.

Erfindungsgemäß wird ein Verfahren zum Polarisationsabgleich vorgeschlagen, vorzugsweise für und/oder bei optischer Kommunikation, Quantenkryptographie und/oder Quanteninformatik,

umfassend eine Quelle zur Erzeugung polarisations-verschränkter Photonenpaare und zwei Detektionsmodule, wobei die Quelle zur Übertragung der Photonen über jeweils einen Quantenkanal mit den zwei Detektionsmodulen verbunden ist, und wobei jedes Detektionsmodul die Polarisation der Photonen in zwei nicht-orthogonalen Basen misst, und
umfassend eine Polarisationskompensationseinheit zum Polarisationsabgleich der Polarisationsänderung bei der Übertragung der Photonen über die Quantenkanäle, wobei die Polarisationskompensationseinheit mehrere optische Komponenten aufweist.

Wesentlich dabei ist, dass der Polarisationsabgleich durch einen Downhill-simplex Algorithmus und/oder durch einen deterministischen Algorithmus erfolgt, wobei für den Downhill-simplex Algorithmus Kontrollparameter in den Detektionsmodulen bei unterschiedlichen Einstellungen der optischen Komponenten gemessen werden, und

anhand des Downhill-simplex Algorithmus die Kontrollparameter minimiert und/oder maximiert werden, und die optischen Komponenten durch die Minimierung und/oder Maximierung der Kontrollparameter durch den Downhill-simplex Algorithmus eingestellt werden, um die Polarisationsänderung bei der Übertragung der Photonen über die Quantenkanäle abzugleichen, und/oder für den deterministischen Algorithmus Kontrollparameter in den Detektionsmodulen bei unterschiedlichen Einstellungen der optischen Komponenten gemessen werden, wobei die unterschiedlichen Einstellungen der optischen Komponenten durch den deterministischen Algorithmus vorgegeben werden, und
anhand der Messungen die Einstellungen der optischen Komponenten zum Polarisationsabgleich durch den deterministischen Algorithmus berechnet werden, und
die optischen Komponenten anhand des deterministischen Algorithmus eingestellt werden, um die Polarisationsänderung bei der Übertragung der Photonen über die Quantenkanäle abzugleichen.

Weiter wird die Aufgabe durch eine Vorrichtung zum Polarisationsabgleich vorgeschlagen, vorzugsweise zur Verwendung für optische Kommunikation, Quantenkryptographie und/oder Quanteninformatik nach den Merkmalen des Anspruchs 14 gelöst.

Erfindungsgemäß wird eine Vorrichtung zum Polarisationsabgleich vorgeschlagen, vorzugsweise zur Verwendung für optische Kommunikation, Quantenkryptographie und/oder Quanteninformatik, wobei die Vorrichtung eine Quelle, zwei Detektionsmodule und eine Polarisationskompensationseinheit aufweist, und

wobei die Quelle polarisations-verschränkte Photonenpaare erzeugt, und
wobei jedes Detektionsmodul die Polarisation der Photonen in zwei nicht-orthogonalen Basen misst, und
wobei jedes Detektionsmodul zur Übertragung der Photonen über einen Quantenkanal mit der Quelle verbunden ist.

Wesentlich dabei ist, dass die Polarisationskompensationseinheit mindestens drei optische Komponente aufweist, um die Polarisationsänderung bei der Übertragung der Photonen über die Quantenkanäle abzugleichen,

wobei die optischen Komponenten als Flüssigkristall-Verzögerungsplatten und/oder Faser-Pressen (fiber-squeezer) ausgebildet sind, und
dass die Flüssigkristall-Verzögerungsplatten und/oder Faser-Pressen (fiber-squeezer) vor und/oder in jeweils einem Detektionsmodul angeordnet sind, oder in der Quelle vor einem oder aufgeteilt vor beiden Quantenkanälen angeordnet sind, oder in jeweils einem Quantenkanal angeordnet sind, oder auf beide Quantenkanäle und/oder Detektionsmodule aufgeteilt angeordnet sind.

Die Kombination beider Algorithmen verbindet die Vorteile beider Algorithmen, d.h. dadurch ist eine schnelle erste Justage des Systems möglich und es kann die Stabilisierung des Systems während des laufenden Kommunikationsverfahrens durchgeführt werden. Eine Stabilisierung des Systems während des laufenden Kommunikationsverfahrens ist notwendig, da sich im Laufe der Zeit, beispielsweise durch Temperaturschwankungen, eine Änderung der unbekannten Polarisationsdrehung in den Fasern ergeben kann.

Der Vorteil des Downhill-simplex Algorithmus (auch Nelder-Mead Algorithmus genannt) liegt darin, dass es sich hierbei um eine lokale nicht-lineare Optimierung ohne Nebenbedingung handelt und der Algorithmus ohne Ableitungen auskommt, wodurch ein einfacher und schneller Polarisationsabgleich möglich ist. Der Vorteil des Downhill-simplex Algorithmus liegt weiter darin, dass anhand dieses

Algorithmus eine erste Justage des Systems erfolgen kann und der Downhill-simplex Algorithmus auch während der optischen Kommunikation, Quantenkryptographie und/oder Quanteninformatik durchgeführt werden kann, um das System stabil zu halten, beispielsweise während der Schlüsselerzeugung.

Der Vorteil des deterministischen Algorithmus liegt darin, dass die erste Justage des Systems sehr schnell und präzise durchgeführt werden kann anhand der vom deterministischen Algorithmus vorgegebenen Messungen, Berechnungen und Einstellungen.

Deterministischer Algorithmus bedeutet hier, dass die Polarisationsänderung bei der Übertragung der Photonen anhand festgelegter Messungen, vorgegeben durch den deterministischen Algorithmus, ermittelt wird und anhand der gemessenen Kontrollparameter durch den deterministischen Algorithmus die Polarisationskompensationseinheit eingestellt wird, um eine optische Kommunikation, Quantenkryptographie und/oder Quanteninformatik zwischen den beiden Detektionsmodulen zu ermöglichen. Der deterministische Algorithmus gibt somit die Einstellungen der Polarisationskompensationseinheit vor, unter der die Messungen der Kontrollparameter durchgeführt werden, gibt die mathematischen Zusammenhänge an, unter der der Polarisationsabgleich anhand der Messergebnisse berechnet wird und stellt die Polarisationskompensationseinheit entsprechend der Berechnung ein, um einen Polarisationsabgleich zu erhalten. Durch die vorgegebenen Einstellungen der optischen Komponenten für die Messungen der Kontrollparameter und der Berechnung des Polarisationsabgleichs anhand der mathematischen Zusammenhänge unterscheidet sich die Justage durch den deterministischen Algorithmus grundlegend von einem heuristischen Justage-Verfahren (Versuch und Irrtum).

Bei der erfindungsgemäßen Anwendung des Downhill-simplex Algorithmus und/oder des deterministischen Algorithmus zum Polarisationsabgleich mit verschränkten Photonenpaaren und der erfindungsgemäßen Vorrichtung erfolgt der Polarisationsabgleich derart, dass die Ausrichtung der Basen der beiden Detektionsmodule aneinander angeglichen werden. Durch das erfindungsgemäße Verfahren und die erfindungsgemäße Vorrichtung ist es nicht notwendig die genaue Orientierung der Basen im allgemeinen Raum zu kennen, es ist nur notwendig, dass beide Basen gleich orientiert sind. Dies bedeutet, dass zum Polarisationsabgleich durch das erfindungsgemäße Verfahren und die erfindungsgemäße Vorrichtung keine festen Basen vorgegeben werden, d.h. beispielsweise erzeugt durch einen Polarisator in der Quelle.

Wesentlich für optische Kommunikation, Quantenkryptographie und/oder Quanteninformatik ist bei dem erfindungsgemäßen Verfahren und der erfindungsgemäßen Vorrichtung mit polarisations-verschränkten Photonenpaaren, dass die Basen der beiden Detektionsmodule in gleicher Weise im allgemeinen Raum orientiert sind. Die genaue Orientierung der Basen im allgemeinen Raum kann durch die Verwendung von Kontrollparametern basierend auf den polarisations-verschränkten Photonenpaaren unbekannt bleiben. Der Vorteil des erfindungsgemäßen Verfahrens und der erfindungsgemäßen Vorrichtung liegt im Nutzen von verschränkten Photonen zum Polarisationsabgleich, wodurch die Quelle keine Photonen mit bekannter Polarisation zum Polarisationsabgleich der beiden Empfänger emittieren muss. Dadurch ist es möglich, bereits während des Abgleichs valide Bits zur optischen Kommunikation, Quantenkryptographie und/oder der Quanteninformatik zu erhalten, beispielsweise bei einer Quantenbitfehlerrate (Quantum Bit Error Rate QBER) ≤ 11% .

Zum Polarisationsabgleich bei optischer Kommunikation, Quantenkryptographie und/oder der Quanteninformatik ist es notwendig mindestens zwei nicht-orthogonale Basen abzugleichen, um eine unerwünschte Polarisationsdrehung für jegliche Polarisation zu kompensieren. Unter zwei nicht-orthogonalen Polarisationsbasen ist hier zu verstehen, wenn ein System ein Photon in einem Zustand der ersten Basis erzeugt und das Photon in der zweiten Basis misst, dass jedes Messergebnis dieser zweiten Basis mit gleicher Wahrscheinlichkeit erhalten werden kann. Ein Beispiel für zwei nicht-orthogonale Polarisationsbasen, sogenannte mutually unbiased bases, sind die H/V und die D/A Basis, dabei steht H für linear horizontale Polarisation, V für linear vertikale Polarisation, D für lineare 45° Polarisation, und A für lineare -45° Polarisation. Ein weiteres Beispiel sogenannter mutually unbiased bases zu den Basen H/V und D/A stellt die R/L Basis als nicht-orthogonale Basis dar, wobei R für zirkular rechtsdrehende Polarisation und L für zirkular linksdrehende Polarisation steht. Als nicht-orthogonale Polarisationsbasen können auch Basen mit elliptischer Polarisation verwendet werden. Zu beachten ist dabei, dass beispielsweise in der Darstellung der Polarisation der Zustände in der Poincaré Kugel die Basen H/V und D/A rechtwinklig zueinander angeordnet sind.

Es kann vorgesehen sein, dass in dem Verfahren zum Polarisationsabgleich die Polarisationskompensationseinheit mindestens drei optische Komponenten aufweist. Es kann vorgesehen sein, dass in dem Verfahren zum Polarisationsabgleich die optischen Komponenten der Polarisationskompensationseinheit als Flüssigkristall-Verzögerungsplatten und/oder als Faser-Pressen (fiber-squeezer) ausgebildet sind.

Es kann im Verfahren mit dem Downhill-simplex Algorithmus und/oder deterministischen Algorithmus vorgesehen sein, dass als Kontrollparameter die Koinzidenzen der Photonenpaare ermittelt werden und/oder die Visibility der Photonenpaare und/oder die Fidelity der Photonenpaare und/oder die Rate mit der ein gemeinsamer Schlüssel erzeugt wird und/oder die Quantenbitfehlerrate (Quantum Bit Error Rate QBER), oder auf derartigen Werten basierende Abwandlungen. Dabei kann es vorgesehen sein, dass es, beispielsweise aus Symmetriegründen, mehrere optimale Werte (Minima und/oder Maxima) der Kontrollparameter beim Polarisationsabgleich gibt, wobei dann durch den Downhill-simplex Algorithmus und/oder deterministischen Algorithmus zufällig oder gezielt einer der optimalen Werte zum Polarisationsabgleich genutzt wird. Weiter hängt es vom verwendeten Kontrollparameter ab, ob dieser minimiert oder maximiert wird, wobei beispielsweise die Quantenbitfehlerrate (Quantum Bit Error Rate QBER) minimiert werden kann und beispielsweise die Visibility maximiert werden kann.

Es kann im Verfahren mit dem Downhill-simplex Algorithmus und/oder deterministischen Algorithmus vorgesehen sein, dass die Einstellungen der Flüssigkristall-Verzögerungsplatten als Teil der Polarisationskompensationseinheit zur Messung der Kontrollparameter die Retardierung $d$ (Verzögerung) und/oder die angelegte Spannung an eine oder mehrere der Flüssigkristall-Verzögerungsplatten ist. Durch eine Änderung der angelegten Spannung an eine der Flüssigkristall-Verzögerungsplatten wird die Retardierung $d$ (Verzögerung) zwischen der schnellen und langsamen optischen Achse in Abhängigkeit der Stärke der angelegten Spannung kontinuierlich verändert.

Es kann im Verfahren mit dem Downhill-simplex Algorithmus und/oder deterministischen Algorithmus vorgesehen sein, dass die Einstellungen der Faser-Pressen (fiber-squeezer) als Teil der Polarisationskompensationseinheit zur Messung der Kontrollparameter die Retardierung $d$ (Verzögerung), und/oder Grad der Quetschung, und/oder Grad der Doppelbrechung, und/oder die angelegte Spannung an eine oder mehrere der Faser-Pressen (fiber-squeezer) ist. Durch eine Änderung des Grads der Quetschung, und/oder der angelegten Spannung an eine der Faser-Pressen (fiber-squeezer) wird die Retardierung $d$ (Verzögerung) zwischen der schnellen und langsamen optischen Achse und/oder die Doppelbrechung in Abhängigkeit der Stärke der angelegten Spannung und/oder Quetschung kontinuierlich verändert.

Es kann im Verfahren und/oder der Vorrichtung vorgesehen sein, dass die Flüssigkristall-Verzögerungsplatten und/oder Faser-Pressen (fiber-squeezer) eine Retardierung $d$ von 0 und $2\pi$ ermöglichen, vorzugsweise eine Retardierung $d$ von 0 und $> 2\pi$, höchste vorzugsweise von 0 und $> 4\pi$. Es kann vorgesehen sein, dass die Spannung für die Retardierung $d$ von 0 und $2\pi$ für die Flüssigkristall-Verzögerungsplatten und/oder Faser-Pressen (fiber-squeezer) bekannt ist. Es kann vorgesehen sein, dass die Spannung für die Retardierung d von 0 und $> 2\pi$, vorzugsweise von 0 und $> 4\pi$ für die Flüssigkristall-Verzögerungsplatten und/oder Faser-Pressen (fiber-squeezer) bekannt ist. Der Vorteil einer Retardierung d von 0 und $> 2\pi$ liegt am wiederkehrenden Verhalten (Modulo) der optischen Komponenten bei der Retardierung. Dabei kann beispielsweise die notwendige Spannung für eine Retardierung $d$ um $2\pi$, d.h. $2\pi - x \equiv 0 - x$ und $2\pi + x \equiv 0 + x$ genutzt werden, um derartige Retardierungssprünge mit kleinen Spannungsänderungen zu erreichen.

Es kann im Verfahren mit dem Downhill-simplex Algorithmus und/oder deterministischen Algorithmus vorgesehen sein, dass die Kontrollparameter quadriert, oder Kontrollparameter³, oder Kontrollparameter^x mit $x = 1, ..., n$ mit $n$ als reelle Zahl verwendet werden. Der Vorteil eines derartigen Algorithmus i) liegt im schnelleren Polarisationsabgleich, da eine schnellere Konvergenz erhalten wird.

Es kann im Verfahren und/oder der Vorrichtung vorgesehen sein, dass der Kontrollparameter durch eine Messung über ein Zeitintervall ermittelt wird. Es kann vorgesehen sein, dass der Zeitintervall zur Ermittlung der Kontrollparameter von der Anzahl der detektieren Koinzidenzen der verschränkten Photonenpaaren abhängt. Es kann vorgesehen sein, dass der Zeitintervall so groß ist bis >100 Koinzidenzen detektiert werden, vorzugsweise > 1000 Koinzidenzen, höchst vorzugsweise > 5000 Koinzidenzen.

Es kann vorgesehen sein, dass die schnellen Achsen der Flüssigkristall-Verzögerungsplatten und/oder der Faser-Pressen (fiber-squeezer) derart zueinander angeordnet sind, dass die erste und zweite Flüssigkristall-Verzögerungsplatte und/oder der Faser-Pressen (fiber-squeezer) die erste Basis und die zweite Basis beeinflussen, wenn die Spannung der ersten oder zweiten Flüssigkristall-Verzögerungsplatte und/oder der Faser-Pressen (fiber-squeezer) geändert wird, und dass die dritte Flüssigkristall-Verzögerungsplatte und/oder der Faser-Presse (fiber-squeezer) nur die zweite Basis beeinflusst, wenn die Spannung der dritten Flüssigkristall-Verzögerungsplatte und/oder der Faser-Presse (fiber-squeezer) geändert wird. Die erste und die zweite Basis sind dabei nicht-orthogonal zueinander ausgebildet. Dies ist beispielsweise möglich, wenn die schnellen Achsen der ersten und der dritten Flüssigkristall-Verzögerungsplatten unter 0° oder unter 90° zueinander angeordnet sind, und wenn die erste und die zweite Flüssigkristall-Verzögerungsplatte unter 45° oder - 45° zueinander angeordnet sind. Dabei bedeutet 0° beispielsweise eine Anordnung der schnellen Achse relativ zur horizontalen linearen Polarisation eines polarisierenden Strahlteilers vor einem Detektor im Detektionsmodul.

Im Folgenden werden der Downhill-simplex Algorithmus und verschiedene Ausführungen des deterministischen Algorithmus im Detail besprochen, wobei anstelle der Flüssigkristall-Verzögerungsplatten auch Faser-Pressen (fiber-squeezer) verwendet werden können. Dabei können alle oder nur einzelne Flüssigkristall-Verzögerungsplatten durch Faser-Pressen (fiber-squeezer) ersetzt werden. Weiter ist im Folgenden möglich, dass bei nicht spezifisch angegebenen Werten der Einstellungen ein beliebiger Wert verwendet werden kann. Dabei können die spezifischen Werte konkrete Werte oder Wertebereiche aufweisen.

Es kann vorgesehen sein, dass das Verfahren mit dem Downhill-simplex Algorithmus vor und/oder während der Schlüsselerzeugung mit verschränkten Photonen bei Quantenkryptographie (QKD) erfolgt. Es kann vorgesehen sein, dass das Verfahren mit dem deterministischen Algorithmus vor der Schlüsselerzeugung mit verschränkten Photonen bei Quantenkryptographie (QKD) erfolgt. Die Schlüsselerzeugung mit verschränkten Photonen bei Quantenkryptographie (QKD) erfolgt in mehreren Schritten. Zuerst werden im Schritt des Schlüsselaustausches (Key Exchange), der auch Rohschlüssel (raw key) Erzeugung genannt wird, die polarisations-verschränkten Photonen in der Quelle erzeugt und jeweils ein Photon eines Paares zu jeweils einem Empfänger (Detektionsmodulen) übermittelt und die Polarisation der verschränkten Photonenpaare gemessen, wobei jede Messung zufällig in einer Basis aus zwei nicht-orthogonalen Basen erfolgt. Die Ergebnisse der Messung sowie in welcher Basis der jeweilige Empfänger gemessen hat werden in diesem Schritt geheim gehalten. Im zweiten Schritt, Key Sifting genannt, werden nur die Ergebnisse der Messungen behalten, bei denen die beiden Empfänger in derselben Basis gemessen haben, d.h. die Basen in der gemessen wurde, werden in diesem Schritt öffentlich kommuniziert. Durch diese Auswahl wird der sogenannte sifted Key erhalten. Danach erfolgt der Schritt der sogenannten Key Distillation, welche beispielsweise Fehlerkorrektur (error correcton) des sifted Keys, Verstärkung der Sicherheit (privacy amplification) und beispielsweise auch eine Authentifizierung der Empfänger beinhalten kann.

Es kann vorgesehen sein, dass bei der Fehlerkorrektur (Error Correction) bei der Quantenkryptographie (QKD) der Inhalt der detektierten fehlerhaften Abschnitte ausgetauscht wird und der Inhalt dieser Abschnitte zusammen mit der Anzahl der nicht fehlerhaften Abschnitte zum Polarisationsabgleich genutzt wird. Vorzugsweise wird dieses Verfahren mit dem Downhill-simplex Algorithmus vor oder während der Schlüsselerzeugung mit verschränkten Photonen bei Quantenkryptographie (QKD) durchgeführt. Durch den Inhalt der fehlerhaften Abschnitte zusammen mit der Anzahl der nicht fehlerhaften Abschnitte kann der Kontrollparameter ermittelt werden. Durch ein derartiges Verfahren können als Kontrollparameter die Koinzidenzen, die Visibility, die Fidelity und/oder die Quantenbitfehlerrate (QBER) genutzt werden, welche während der Schlüsselerzeugung eines Quantenkryptographie (QKD) Protokolls erhalten werden. Der Vorteil eines derartigen Verfahrens liegt darin, dass nur Kontrollparameter verwendet werden, welche durch die Komponenten ermittelt werden können, die bei einem Quantenkryptographie-Verfahren genutzt werden.

Es kann vorgesehen sein, dass der Downhill-simplex Algorithmus bei der Schlüsselerzeugung anfallende Messwerte als Kontrollparameter für den Polarisationsabgleich benutzt. Der Vorteil der Verwendung des Downhill-simplex Algorithmus mit bei der Schlüsselerzeugung anfallenden Messwerten als Kontrollparameter liegt darin, dass dieser während der Schlüsselerzeugung bei der Quantenkryptographie genutzt werden kann, und dass zusätzlich keine gesonderte Justierungsphase vor der Schlüsselerzeugung notwendig ist und keine weiteren optischen Bauteile zur Bestimmung der Kontrollparameter notwendig sind. Keine gesonderte Justierungsphase bedeutet hier, dass die Schlüsselerzeugung analog zu einem Quantenkryptographie Protokoll durchgeführt wird, auch wenn noch kein Polarisationsabgleich erfolgt ist. Wesentlich dabei ist aber, dass die beim Quantenkryptographie Protokoll erhaltenen Bits erst als sicher gelten, wenn durch den Polarisationsabgleich durch den Downhill-simplex Algorithmus beispielsweise eine Quantenbitfehlerrate (Quantum Bit Error Rate QBER) von $\leq 11\%$ erhalten wird. Bereiche die bei der Schlüsselerzeugung eine (Quantum Bit Error Rate QBER) von > 11% aufweisen werden verworfen.

Es kann bei der Verwendung des Downhill-simplex Algorithmus vorgesehen sein, dass für jede Flüssigkristall-Verzögerungsplatte die Spannung einer Retardierung um $2\pi$ bekannt ist. Eine Retardierung $d$ um $2\pi$ entspricht einer Verzögerung um eine volle Wellenlänge. Der Vorteil des erfindungsgemäßen Verfahrens und der erfindungsgemäßen Vorrichtung liegt darin, dass keine weitere Kalibrierung wie beispielsweise der Temperaturabhängigkeit der Flüssigkristall-Verzögerungsplatten notwendig ist, die zwei Spannungswerte 0 und $2\pi$ genügen.

Es kann vorgesehen sein, dass der Downhill-simplex Algorithmus den Kontrollparameter in Abhängigkeit der Retardierung d (Verzögerung) und/oder der Spannung der Flüssigkristall-Verzögerungsplatten minimiert und/oder maximiert.

Es kann vorgesehen sein, dass der Downhill-simplex Algorithmus zur Minimierung (Konvergenz) in jedem Schritt jeweils mindestens vier Messpunkte aufweist, um einen drei-dimensionalen Kontrollparameterraum, ein sogenanntes Simplex, aufzuspannen. Das Volumen des Simplex oder der Abstand der einzelnen Messpunkte, die das Simplex aufspannen, zueinander oder zu einem gemeinsamen Referenzpunkt (z.B. Mittelpunkt), kann als Maß für die Konvergenz, d.h. den Polarisationsabgleich, betrachtet werden. Es kann vorgesehen sein, dass der Downhill-simplex Algorithmus für jeden weiteren Schritt das Volumen des Simplex, oder der Abstand der einzelnen Messpunkte, die das Simplex aufspannen, zueinander oder zu einem gemeinsamen Referenzpunkt (z.B. Mittelpunkt) zum vorhergehenden Schritt verkleinert. Die Konvergenz wird erreicht, indem eine neue Messung durchgeführt wird, durch die sich das Volumen des Simplex, oder der Abstand der einzelnen Messpunkte, die das Simplex aufspannen, zueinander oder zu einem gemeinsamen Referenzpunkt (z.B. Mittelpunkt) zum vorhergehenden Schritt verkleinert und durch die neue Messung ein alter Messpunkt zur Berechnung des Simplex ersetzt wird, um zu konvergieren. Dabei kann vorgesehen sein, dass mehrere Messungen durchgeführt werden, um einen Messpunkt zu erhalten, welcher das Simplex konvergieren lässt.

Es kann vorgesehen sein, dass der Kontrollparameter für den Downhill-simplex Algorithmus einen Grenzwert aufweist, ab dem die weitere Minimierung (Konvergenz) verhindert wird. Der Vorteil eines derartigen Grenzwertes liegt darin, dass der Downhill-simplex Algorithmus in der Lage ist, auf zeitliche Änderungen der Polarisationsänderungen besser zu reagieren. Dazu verhindert der Downhill-simplex Algorithmus bei der Konvergenz ab dem Erreichen eines Grenzwertes das weitere Schrumpfen des Simplex. Wäre das Simplexvolumen näherungsweise Null oder sehr klein, kann der Algorithmus das Simplex nicht mehr expandieren und die aufspannenden Punkte können nicht mehr wandern oder es ist nur noch nach sehr vielen Schritten eine entsprechende Expansion möglich. Durch den Grenzwert ist der Downhill-simplex Algorithmus in der Lage, immer aus dem nicht gänzlich erreichten Minimum heraus zu manövrieren und so auf eine zeitliche Änderung der Polarisationsänderungen zu reagieren.

Es kann vorgesehen sein, dass als Grenzwert die Quantenbitfehlerrate (Quantum Bit Error Rate QBER) $\leq 11\%$ gilt. Der Vorteil dieses Grenzwertes liegt darin, dass bei einer derartigen Quantenbitfehlerrate ein sicherer Schlüssel erzeugt werden kann. Bei einer Quantenbitfehlerrate oberhalb dieses Grenzwertes wird die Quantenbitfehlerrate als Kontrollparameter zum Polarisationsabgleich verwendet, aber daraus kein Schlüssel erzeugt.

Es kann vorgesehen sein, dass der deterministische Algorithmus zur Messung der Kontrollparameter feste Werte und/oder Wertebereiche für die unterschiedlichen Einstellungen der optischen Komponenten vorgibt. Beispielsweise kann als Wert eine bestimmte Retardierung $d_x$ (Verzögerung) vorgegeben werden oder beispielsweise für einen Wertebereiche die Retardierung $d$ (Verzögerung) über einen Bereich $0 + x$ bis $2\pi - x$.

Es kann vorgesehen sein, dass der deterministische Algorithmus, vorzugsweise in einer ersten Ausführung i), zweiten Ausführung ii) und/oder dritten Ausführung iii), auf einer $a \sin(d + b) + c$ förmigen Beziehung des Kontrollparameters zur Retardierung $d$ beruht, vorzugsweise einer $a \sin(d + b) + c$ förmigen Beziehung des Kontrollparameters zur Retardierung $d$ bei einer Änderung der Spannung nur einer optischen Komponente, mit $a, b, c$ als Fitparameter. Der Kontrollparameter kann hier beispielsweise die Koinzidenzen der verschränkten Photonenpaaren sein, oder ein Wert der auf den Koinzidenzen der verschränkten Photonenpaaren basiert. $a$ entspricht der Amplitude, $b$ entspricht der Phase, und c entspricht dem Offset der Sinusfunktion. Der Vorteil der ersten Ausführung i), zweiten Ausführung ii), und dritten Ausführung iii) des deterministischen Algorithmus liegt in der festen Anzahl der Messwerte, die notwendig sind und durch die jeweilige Ausführung vorgegeben werden, um die Retardierung zum Polarisationsabgleich durch die sinförmige Beziehung des Kontrollparameters zu berechnen.

Es kann vorgesehen sein, dass der Kontrollparameter für den deterministischen Algorithmus in seiner ersten Ausführung i), zweiten Ausführung ii) und/oder dritten Ausführung iii) die Koinzidenzen und/oder die Visibility, und/oder die Quantenbitfehlerrate (Quantum Bit Error Rate QBER), und/oder die Fidelity der verschränkten Photonenpaare ist, oder darauf basierende Werte ist.

Es kann vorgesehen sein, dass bei dem deterministischen Algorithmus in seiner ersten Ausführung i), zweiten Ausführung ii) und/oder dritten Ausführung iii) durch eine Optimierung der Retardierung der ersten und der zweiten Flüssigkristall-Verzögerungsplatten zuerst der Polarisationsabgleich in einer ersten Basis erfolgt und anschließend durch eine Optimierung der Retardierung der dritten Flüssigkristall-Verzögerungsplatten der Polarisationsabgleich in einer zweiten Basis erfolgt.

In den folgenden detailliert beschriebenen ersten, zweiten und dritten Ausführungen des deterministischen Algorithmus sind die optischen Achsen der ersten, zweiten und dritten Flüssigkristall-Verzögerungsplatten beispielhaft unter den Winkeln 0°, 45° und 0° zueinander angeordnet.

Es kann vorgesehen sein, dass zum Polarisationsabgleich in der ersten Ausführung i) des deterministischen Algorithmus die folgenden Messungen durchgeführt werden und die Einstellungen zum Polarisationsabgleich wie folgt ermittelt werden:

- Optimierung der Retardierung $d_{2opt}$ der zweiten Flüssigkristall-Verzögerungsplatten durch

  1. mindestens drei Messungen des Kontrollparameters C in einer ersten Basis bei einem beliebigen festen Wert $d_{2i}$ der zweiten Flüssigkristall-Verzögerungsplatte bei jeweils unterschiedlicher Retardierung $d_{1x}$ der ersten Flüssigkristall-Verzögerungsplatte (mit $x$ = 3, ..., $n$ und $n$ als natürliche Zahl), und Bestimmung der Fitparameter $a$, $b$, $c$ mit $C_{d_1}$ = $a$ sin($d_1$ + $b$) + $c$ bei $d_{2i}$ und $d_3$ = 0, und Bestimmung der maximalen Koinzidenzen bei den verwendeten Werten in der ersten Basis durch

$$K_{max}(d_{2i}) = |a| + c;$$

  2. Durchführung der Messungen 1. Für zwei weitere Werte $d_{2ii}$ und $d_{2iii}$ und Bestimmung der Werte $K_{max}(d_{2ii})$ und $K_{max}(d_{2iii})$ analog zu 1.;
  3. Bestimmung der Fitparameter A, B, C durch

$$K_{\max}(d_{2y}) = A \left( \sin \left( |d_{2y} - \pi| - B \frac{\pi}{2} \right) \right) + C \text{ (mit } y = i, ii, iii)$$

anhand der Werte $K_{max}(d_{2i}), K_{max}(d_{2ii}), K(d_{2iii})$ und Bestimmung von $d_{2opt}$ bei dem die Koinzidenzen in der ersten Basis maximal sind durch

$$K_{\max}(d_{2opt}) = A \left( \sin \left( |d_{2opt} - \pi| - B \frac{\pi}{2} \right) \right) + C$$

  4. Einstellung der Retardierung $d_{2opt}$ der zweiten Flüssigkristall-Verzögerungsplatte.

- Optimierung der Retardierung $d_{1opt}$ der ersten Flüssigkristall-Verzögerungsplatten durch

  1. mindestens drei Messungen des Kontrollparameters $C$ in der ersten Basis bei jeweils unterschiedlicher Retardierung $d_{1x}$ der ersten Flüssigkristall-Verzögerungsplatte und den Werten $d_2$ = $d_{2opt}$ und $d_3$ = 0;
  2. Bestimmung von $d_{1opt}$, bei dem die Koinzidenzen in der ersten Basis maximal sind durch $C_{d_{1opt}}$ = $a$ sin($d_{1opt}$ + $b$) + $c$;
  3. Einstellung der Retardierung $d_{1opt}$ der ersten Flüssigkristall-Verzögerungsplatte.

- Optimierung der Retardierung $d_{3opt}$ der dritten Flüssigkristall-Verzögerungsplatten durch

  1. mindestens drei Messungen des Kontrollparameters $C$ in einer zweiten Basis bei jeweils unterschiedlicher Retardierung $d_{3x}$ und den Werten $d_1$ = $d_{1opt}$ und $d_2$ = $d_{2opt}$
  2. Bestimmung von $d_{3opt}$, bei dem die Koinzidenzen in der zweiten Basis maximal sind durch $C_{d_{3opt}}$ = $a$ sin($d_{3opt}$ + $b$) + $c$;
  3. Einstellung der Retardierung $d_{3opt}$ der ersten Flüssigkristall-Verzögerungsplatte.

Oder

- Optimierung der Retardierung $d_{3opt}$ der dritten Flüssigkristall-Verzögerungsplatten durch

  1. mindestens eine Messung des Kontrollparameters, vorzugsweise der Fidelity als Kontrollparameter, bei den Werten $d_1$ = $d_{1opt}$ und $d_2$ = $d_{2opt}$ und $d_3$ = 0

$$d_{3opt} = -\cos^{-1} \frac{F(d_{1opt}, d_{2opt}, 0) - 0.5}{0.5}$$

  2. Bestimmung von $d_{3opt}$ mit , da für bei $d_{1opt}, d_{2opt}, d_3$ gilt $F(d_{1opt}, d_{2opt}, d_3)$ = 0.5 cos($d_3$ - C) + 0.5, wobei $d_{3opt}$ = -$d_{3opt}$ gilt, falls $F(d_{1opt}, d_{2opt}, d_{3opt})$ = 0
  3. Einstellung der Retardierung $d_{3opt}$ der ersten Flüssigkristall-Verzögerungsplatte.

Es kann vorgesehen sein, dass zum Polarisationsabgleich in der zweiten Ausführung ii) des deterministischen Algorithmus die folgenden Messungen durchgeführt werden und die Einstellungen zum Polarisationsabgleich wie folgt ermittelt werden:

- Optimierung der Retardierung $d_{1opt}$ der ersten Flüssigkristall-Verzögerungsplatten und $d_{2opt}$ der zweiten Flüssig-kristall-Verzögerungsplatten durch

  1. $n \geq 2$ Messungen des Kontrollparameters mit $n$ als Natürliche Zahl, vorzugsweise der Koinzidenzen in der ersten Basis als Kontrollparameter, in Abhängigkeit der Retardierungen $d_{1n}$ und $d_{2n}$ mit $d_1 \neq d_2$ bei mindestens einer Messung mit unterschiedlicher Retardierung $d_{1n}$ und/oder $d_{2n}$ für jede Messung;

  2. Fitten der Gleichung $HH(d_1, d_2) = A \sin(d_2) \cos(d_1 - B) \pm \sqrt{(\frac{HH_{max}}{2})^2 - A^2} \cos(d_2) + \frac{HH_{max}}{2}$ mit

  $$HH_{max} = \frac{HH + VV + HV + VH}{2}$$ und mit dem Parameter $A <$

  $HH_{max} = HH + HV$ wenn $HH = VV$ gilt, oder mit $HH_{max}/2$ zur Bestimmung der Parameter A und B zur Bestimmung von $d_{1opt}$ und $d_{2opt}$ mit $d_{1opt} = B$ und

  $$d_{2opt} = \pm \tan^{-1} \frac{A}{\sqrt{\frac{HH_{max}^2}{2} - A^2}}$$, mit + falls $HH(0,0) > \frac{HH_{max}}{2}$ und - anderenfalls, wobei $d_{2opt} = d_{2opt} +$

  $\pi$ gilt falls $HH = 0$.
  3. Einstellung der Retardierung $d_{1opt}$ der ersten Flüssigkristall-Verzögerungsplatte.

- Optimierung der Retardierung $d_{3opt}$ der dritten Flüssigkristall-Verzögerungsplatten durch

  1. mindestens drei Messungen des Kontrollparameters $C$ in einer zweiten Basis bei jeweils unterschiedlicher Retardierung $d_{3x}$ und den Werten $d_1 = d_{1opt}$ und $d_2 = d_{2opt}$
  2. Bestimmung von $d_{3opt}$ bei dem die Koinzidenzen in der zweiten Basis maximal sind durch $C_{d3opt} = a \sin(d_{3opt} + b) + c$;
  3. Einstellung der Retardierung $d_{3opt}$ der ersten Flüssigkristall-Verzögerungsplatte.

  Oder

- Optimierung der Retardierung $d_{3opt}$ der dritten Flüssigkristall-Verzögerungsplatten durch

  1. mindestens eine Messung des Kontrollparameters, vorzugsweise der Fidelity als Kontrollparameter, bei den Werten $d_1 = d_{1opt}$ und $d_2 = d_{2opt}$ und $d_3 = 0$

  $$d_{3opt} = -\cos^{-1} \frac{F(d_{1opt}, d_{2opt}, 0) - 0.5}{0.5}$$

  2. Bestimmung von $d_{3opt}$ mit da für bei $d_{1opt}, d_{2opt}, d_3$ gilt $F(d_{1opt}, d_{2opt}, d_3) = 0.5 \cos(d_3 - C) + 0.5$, wobei $d_{3opt} = -d_{3opt}$ gilt falls $F(d_{1opt}, d_{2opt}, d_{3opt}) = 0$
  3. Einstellung der Retardierung $d_{3opt}$ der ersten Flüssigkristall-Verzögerungsplatte.

Es kann vorgesehen sein, dass zum Polarisationsabgleich in der zweiten Ausführung ii) des deterministischen Algorithmus der Fit durch eine nicht-lineare Methode erfolgt, vorzugsweise durch den kleinsten Quadrate Fit (non-linear least square fit) erfolgt.

Es kann vorgesehen sein, dass zum Polarisationsabgleich in der zweiten Ausführung ii) des deterministischen Algorithmus nur zwei Messungen des Kontrollparameters durchgeführt werden oder dass mehr als zwei Messungen des Kontrollparameters durchgeführt werden. Der Vorteil von nur zwei Messungen liegt darin, dass der Polarisationsabgleich extrem schnell durchgeführt werden kann. Der Vorteil von mehr als zwei Messungen liegt darin, dass der Polarisationsabgleich in einfacher Weise auch bei verrauschten Systemen einen präzisen Polarisationsabgleich ermöglicht.

Es kann vorgesehen sein, dass zum Polarisationsabgleich in der dritten Ausführung iii) des deterministischen Algorithmus die folgenden Messungen durchgeführt werden und die Einstellungen zum Polarisationsabgleich wie folgt ermittelt werden:

- Optimierung der Retardierung $d_{1opt}$ der ersten Flüssigkristall-Verzögerungsplatte durch

1. Zwei oder drei Messungen des Kontrollparameters $C$ in einer ersten Basis, vorzugsweise der Koinzidenzen in der ersten Basis ($HH(d_1,d_2)$) als Kontrollparameter mit den Werten $HH(0,d_2) = P_1$, $$HH\left(\frac{\pi}{2}, d_2\right) = P_2$$ ,
und $HH(\pi, d_2) = P_3$ mit beliebigen $d_2$, mit $0 < d_2 < \pi$ und beliebigen $d_3$, beispielsweise mit $HH(d_1, d_2) = A \sin(d_2)$

$$\cos(d_1 - B) \pm \sqrt{\left(\frac{\mathrm{HH_{max}}}{2}\right)^2 - A^2}\cos(d_2) + \frac{\mathrm{HH_{max}}}{2}$$ , wobei für $$d_2 = \frac{\pi}{2}(2n + 1)$$ nur zwei Messungen durchgeführt werden.

2. Bestimmung von $d_{1opt}$ im Falle von drei Messungen mit $$d_{1opt} = \tan^{-1}\frac{P_2 - \frac{P_1 + P_3}{2}}{P_1 - \frac{P_1 + P_3}{2}}$$ , wobei $d_{1opt} = d_{1opt}$

$$d_{1opt} = -\sin^{-1}\frac{\pm P_o}{\sqrt{p_0^2 + p_1^2}} \pm \frac{3}{2}\pi$$ , wobei

$+ \pi$ gilt, falls $P_1 < P_3$ gilt, bzw. im Fall von nur zwei Messungen "+" bei $P_1 > 0$ und "-" bei $P_1 < 0$ genutzt wird.

3. Einstellung der Retardierung $d_{1opt}$ der ersten Flüssigkristall-Verzögerungsplatte.

- Optimierung der Retardierung $d_{2opt}$ der zweiten Flüssigkristall-Verzögerungsplatte durch

1. eine Messung des Kontrollparameters $C$ in einer ersten Basis, vorzugsweise der Koinzidenzen $HH(d_1,d_2)$ als Kontrollparameter mit den Werten $d_{1opt}$ und beliebigen $d_2$ mit beispielsweise $d_2 = 0$ um den Messwert $P_4 = HH(d_{1opt}, d_2 = 0)$ zu erhalten;

2. Bestimmung von $d_{2opt}$ durch $$HH\left(d_{1opt}, d_2\right) = \frac{\mathrm{HH_{max}}}{2}\cos\left(d_2 - d_{2opt}\right) + \frac{\mathrm{HH_{max}}}{2}$$ mit $HH_{max} =$

$HH + HV$ wenn $HH = VV$ gilt, oder mit $$HH_{max} = \frac{HH + VV + HV + VH}{2}$$ mit $$d_{2opt} = \cos^{-1}\frac{P_4 - \frac{\mathrm{HH_{max}}}{2}}{\frac{\mathrm{HH_{max}}}{2}}$$

$$d_{2opt} = \cos^{-1}\frac{P_4 - \frac{\mathrm{HH_{max}}}{2}}{\frac{\mathrm{HH_{max}}}{2}} + d_{2set}$$ für $d_2 = 0$, oder mit $d_{2opt} = \dots$ für $d_2 \neq 0$;

3. Einstellung der Retardierung $d_{2opt}$ der ersten Flüssigkristall-Verzögerungsplatte.

- Optimierung der Retardierung $d_{3opt}$ der dritten Flüssigkristall-Verzögerungsplatte durch

1. mindestens drei Messungen des Kontrollparameters $C$ in einer zweiten Basis bei jeweils unterschiedlicher Retardierung $d_{3x}$ und den Werten $d_1 = d_{1opt}$ und $d_2 = d_{2opt}$
2. Bestimmung von $d_{3opt}$, bei dem die Visibility in der zweiten Basis maximal ist durch $C_{d3opt} = a\sin(d_{3opt} + b) + c$;
3. Einstellung der Retardierung $d_{3opt}$ der ersten Flüssigkristall-Verzögerungsplatte.

oder

- Optimierung der Retardierung $d_{3opt}$ der dritten Flüssigkristall-Verzögerungsplatte durch

1. mindestens eine Messung des Kontrollparameters, vorzugsweise der Fidelity als Kontrollparameter, bei den Werten $d_1 = d_{1opt}$ und $d_2 = d_{2opt}$ und $d_3 = 0$

2. Bestimmung von $d_{3opt}$ mit $$d_{3opt} = -\cos^{-1}\frac{\mathrm{F}\left(d_{1opt}, d_{2opt}, 0\right) - 0.5}{0.5}$$ da für bei $d_{1opt}, d_{2opt}, d_3$ gilt $F(d_{1opt}, d_{2opt}, d_3) = 0.5\cos(d_3 - C) + 0.5$, wobei $d_{3opt} = -d_{3opt}$ gilt, falls $F(d_{1opt}, d_{2opt}, d_{3opt}) = 0$
3. Einstellung der Retardierung $d_{3opt}$ der ersten Flüssigkristall-Verzögerungsplatte.

Es kann vorgesehen sein, dass zum Polarisationsabgleich in der zweiten Ausführung ii) und/oder der dritten Ausführung iii) des deterministischen Algorithmus der Kontrollparameter korrigiert ist in Bezug auf zufällige Detektionsergebnisse, welche beispielsweise ausgelöst werden durch die Messung von Koinzidenzen basierend auf nicht verschränkten Photonenpaaren (accidental coincidences). Es kann vorgesehen sein, dass die Korrektur der zufälligen Detektionsergebnisse durch einen zusätzlichen Parameter D bei der Optimierung der Retardierung $d_{3opt}$ der dritten Flüssigkristall-Verzögerungsplatten ausgeglichen wird durch

$$F\left(d_{1_{opt}}, d_{2_{opt}}, d_3\right) = \frac{1-D}{2}\cos(d_3 - C) + D$$

mit $D > 0$. $D$ ist dabei der Wert des Kontrollparameters welcher sich beispielsweise durch kein polarisations-verschränktes Photonenpaar (accidental coincidences) und/oder durch eine nicht perfekte verschränkte Photonenquelle ergibt.

Es kann vorgesehen sein, dass nach dem Polarisationsabgleich anhand der ersten Ausführung i), zweiten Ausführung ii) und/oder dritten Ausführung iii) des deterministischen Algorithmus die Quantenbitfehlerrate (Quantum Bit Error Rate QBER) gemessen wird, und

bei einer Quantenbitfehlerrate (Quantum Bit Error Rate QBER) ≤ 11% die optische Kommunikation, Quantenkryptographie und/oder Quanteninformatik als sicher durchgeführt wird, oder

bei einer Quantenbitfehlerrate (Quantum Bit Error Rate QBER) >11% die optische Kommunikation, Quantenkryptographie und/oder Quanteninformatik nicht durchgeführt wird. Der Vorteil der ersten Ausführung i), zweiten Ausführung ii) und/oder dritten Ausführung iii) des deterministischen Algorithmus liegt darin, dass nach der Durchführung des Polarisationsabgleichs anhand des deterministischen Algorithmus erkannt werden kann, ob das System korrumpiert ist, indem nach dem Polarisationsabgleich die Quantenbitfehlerrate (Quantum Bit Error Rate QBER) gemessen wird und anhand des Ergebnisses das System als sicher oder als korrumpiert eingeordnet werden kann. Vorzugsweise wird die Messung der Quantenbitfehlerrate (Quantum Bit Error Rate QBER) zeitnah nach der Durchführung des Polarisationsabgleichs durchgeführt.

Es kann vorgesehen sein, dass bei der Optimierung der Retardierung der ersten und/oder zweiten, und oder dritten Flüssigkristall-Verzögerungsplatten mehrere Messungen durchgeführt werden oder die Messungen über einen längeren Zeitraum gemittelt werden. Es kann vorgesehen sein, dass die Anzahl der Messungen und/oder der Zeitraum von den detektierten Koinzidenzen abhängt. Es kann vorgesehen sein, dass die Messungen durchgeführt werden und/oder das Zeitintervall so groß ist bis > 100 Koinzidenzen detektiert wurden, vorzugsweise > 1000 Koinzidenzen, höchst vorzugsweise > 5000 Koinzidenzen. Der Vorteil einer derartigen Ausführung erhöht die Genauigkeit des Polarisationsabgleichs.

Es kann vorgesehen sein, dass nach dem Polarisationsabgleich mit dem deterministischen Algorithmus, vorzugsweise in seiner ersten Ausführung i), zweiten Ausführung ii) und/oder dritten Ausführung iii), zur zeitlich dauerhaften Stabilisierung des Systems ein heuristisches Justage-Verfahren angewandt wird. Dabei kann vorgesehen sein, dass nacheinander immer nur eine optische Komponente justiert wird. Es kann vorgesehen sein, dass nur die optische Komponente justiert wird, deren Kontrollparameter einen Grenzwert unterschreitet oder überschreitet. Beispielsweise wird nur die dritte optische Komponente justiert, wenn beispielsweise die Visibility in der D/A Basis als Kontrollparameter den Grenzwert, z.B. 95%, unterschreitet.

Vorzugsweise nur diese optische Komponente für die der Kontrollparameter unterschritten und/oder überschritten wird.

Es kann vorgesehen sein, dass der Polarisationsabgleich durch einen oder mehrere der voran genannten deterministischen Algorithmen erfolgt.

Es kann vorgesehen sein, dass die Quelle zur Erzeugung polarisations-verschränkter Photonenpaare ein oder mehrere nicht-lineare Elemente aufweist. Es kann vorgesehen sein, dass die Quelle zur Erzeugung polarisations-verschränkter Photonenpaare als eine Sagnac Quelle, und/oder eine BBO Quelle, und/oder gekreuzte Kristall Quelle, und/oder beam-displacer Quelle, und/oder einer Quelle basierend auf einer spontanen Vier-Wellen Mischung ausgebildet ist.

Es kann vorgesehen sein, dass jedes Detektionsmodul optische Komponenten zur Messung der Photonen in zwei nicht-orthogonalen Basen aufweist. Es kann vorgesehen sein, dass die optischen Komponenten zur Messung der Photonen feste optische Komponenten und/oder variable optische Komponenten aufweisen. Es kann vorgesehen sein, dass die festen Komponenten als ein oder mehrere Strahlteiler und/oder polarisierende Strahlteiler und/oder Wellenplättchen und/oder Polarisatoren und/oder Detektoren ausgebildet sind. Es kann vorgesehen sein, dass die variablen optischen Komponenten als variable Wellenplättchen und/oder elektro-optische Modulatoren und/oder variable Polarisatoren ausgebildet sind.

Es kann vorgesehen sein, dass die Detektoren als Einzelphoton-Detektoren ausgebildet sind.

Es kann vorgesehen sein, dass die Detektionsmodule die Messung der Photonen an einen Computer oder eine Logik kommunizieren. Dabei kann der Zeitpunkt der Messung des Photons kommuniziert werden, und/oder die Polarisation der gemessenen Photonen. Es kann vorgesehen sein, dass jedes Detektionsmodul die Messung der Photonen jeweils an einen eigenen Computer oder eine eigene Logik kommunizieren, um für jede Detektion einen Zeitstempel, die Basis in der die Messung durchgeführt wurde und die gemessene Polarisation zu erhalten, wobei zur Bestimmung der Koinzidenzen der verschränkten Photonenpaare die Zeitstempel und die Basis in der die Messungen durchgeführt wurden zwischen den Computern oder Logiken ausgetauscht werden.

Es kann vorgesehen sein, dass der Computer oder die Logik mit der Polarisationskompensationseinheit verbunden ist. Es kann vorgesehen sein, dass der Computer oder die Logik die Retardierung $d$ (Verzögerung) und/oder die angelegte Spannung an eine oder mehrere der Flüssigkristall-Verzögerungsplatten, und/oder die Retardierung $d$ (Verzögerung), und/oder Grad der Quetschung, und/oder Grad der Doppelbrechung, und/oder die angelegte Spannung an eine oder mehrere der Faser-Pressen (fiber-squeezer) ausliest und/oder steuert. Es kann vorgesehen sein, das im Falle von jeweils einem Computer oder jeweils einer Logik je Detektionsmodul nur einer der Computer oder eine der Logiken mit der Polarisationskompensationseinheit verbunden ist und diese ausliest und/oder steuert.

Das Auslesen und/oder Steuern der optischen Komponenten durch den Computer oder die Logik, sowie die Kommunikation der Detektionsmodule mit dem Computer oder der Logik ermöglicht eine automatisierte Justage und Stabilisierung.

Es kann vorgesehen sein, dass der Computer oder die Logik mit einem Mikroprozessor und einem nichtflüchtigen Speicher ausgebildet sind, wobei der nicht-flüchtige Speicher einen ablauffähigen Programmcode eines Programms zur Durchführung des erfindungsgemäßen Verfahrens aufweist.

Es kann vorgesehen sein, dass die Quantenkanäle als Glasfasern, und/oder Hohlraumfasern, und oder Freistahllink ausgebildet sind.

Es kann vorgesehen sein, dass die Vorrichtung nach einem der vorangehenden Ausführungsbeispiele zur Durchführung eines Verfahrens zum Polarisationsabgleich nach einem der vorangehenden Ausführungsbeispiele des Verfahrens ausgebildet ist.

Unter Koinzidenzen sind hier die Photonen eines verschränkten Photonenpaares zu verstehen, die bei dem ersten Detektionsmodul (Empfänger 1) die Polarisation $p_1$ aufweisen und beim zweiten Detektionsmodul (Empfänger 2) die Polarisation $p_2$ aufweisen. $p_1$ und $p_2$ stehen dabei für eine Polarisation, vorzugsweise eine Polarisation der zwei nicht-orthogonalen Basen, beispielsweise der Polarisationen H, V, D, A. In diesem Beispiel sind acht Paarungen, vier korrelierend und vier antikorrelierend Koinzidenzen möglich $C_{HH}$, $C_{VV}$, $C_{HV}$, $C_{VH}$, $C_{DD}$, $C_{AA}$, $C_{DA}$, $C_{AD}$.

Korrelierend bedeutet dabei, dass die Koinzidenzen zwischen diesen Detektoren möglichst maximal sind, während anti-korrelierende Detektorpaarungen möglichst wenig Koinzidenzen aufweisen. Die Wahl der Paarungen ergibt sich dynamisch während der Routine der Polarisationskompensation, da die gemessenen Koinzidenzen miteinander auf bestimmte Weise verrechnet werden und einen einzigen Kontrollparameter zur Steuerung des Optimierungsalgorithmus bereitstellen. Dies ist ein besonderer Vorteil des erfindungsgemäßen Verfahrens, da dem Optimierungsalgorithmus dadurch vier optimale Einstellmöglichkeiten geboten werden, statt nur einer.

Aus den gemessenen Koinzidenzen kann die Visibility $V_{p_1,p_2}$ berechnet werden. Diese stellt als Kontrastfunktion ein Maß für die Güte der Verschränkung F (Fidelity) in der jeweiligen Basis dar. Die Visibility kann Werte im Intervall [-1, 1] annehmen. Beispielsweise für die Basen H/V und D/A wird die Visibility berechnet durch

$$V_{HV} = \frac{C_{HH}+C_{VV}-C_{HV}-C_{VH}}{C_{HH}+C_{VV}+C_{HV}+C_{VH}}, \quad \text{oder} \quad V_{DA} = \frac{C_{DD}+C_{AA}-C_{DA}-C_{AD}}{C_{DD}+C_{AA}+C_{DA}+C_{AD}}.$$

In diesem Ausführungsbeispiel sind korrelierende Paarungen $C_{HH}$ und $C_{VV}$, sowie $C_{DD}$ und $C_{DD}$, die entsprechend maximiert werden sollten, während die Paarungen $C_{HV}$ und $C_{VH}$ sowie $C_{DA}$ und $C_{AD}$ anti-korrelierende Paarungen darstellen und minimiert werden sollten.

Weitere valide Paarungen zur Erzeugung von Schlüsselpaaren sind möglich, indem wahlweise das Vorzeichen oder von beiden Formeln zugleich gewechselt wird. Dadurch ergibt sich ein besonderer Vorteil des erfindungsgemäßen Verfahrens, indem der Algorithmus dynamisch entscheidet, welche Paarungen korreliert und welche anti-korreliert sind, so dass bei der Nutzung dieses Kontrollparameters nicht nur eine optimale Einstellung existiert, sondern vier verschiedene.

Die Güte der Verschränkung (Fidelity) F ergibt sich aus den Visibilities $V_{HV}$ und $V_{DA}$, beispielsweise Näherungsweise durch $F = \frac{1}{2}(V_{HV} + V_{DA})$, und kann Werte im Intervall [0, 1] annehmen. Um die Korrelationen frei zu wählen, kann die absolute Fidelity F* als Kontrollparameter gewählt werden $F^* = \frac{1}{2}(|V_{HV}| + |V_{DA}|)$ mit Werten im Intervall [0, 1].

Die Quantenbitfehlerrate (Quantum Bit Error Rate QBER) lässt sich direkt aus den Koinzidenzen als Quotient der Summe aller anti-korrelierten Koinzidenzen zur Summe aller Koinzidenzen bestimmen, beispielsweise durch

$$QBER = \frac{C_{HV}+C_{VH}+C_{DA}+C_{AD}}{C_{HH}+C_{VV}+C_{HV}+C_{VH}+C_{DD}+C_{AA}+C_{DA}+C_{AD}}.$$

Entsprechend des erfindungsmäßen Verfahrens kann der QBER als Kontrollparameter verwendet werden, ebenso wie ein verallgemeinerter QBER Wert, der im Zähler die Summe aller jeweiligen anti-korrelierten Koinzidenzen aufweist.

Ein alternatives Maß für den QBER basiert auf der Fidelity und wird beispielsweise durch

$$QBER = \frac{1}{2}(1 - F) \qquad\qquad QBER^* = \frac{1}{2}(1 - F^*)$$

bestimmt. Es ist auch möglich, einen verallgemeinerten QBER* mit als Kontrollparameter zu verwenden.

Weitere Ausführungen der Erfindung sind in den Figuren dargestellt und nachfolgend beschrieben. In den Figuren ist beispielhaft eine mögliche Ausgestaltung der Erfindung gezeigt. Diese Ausgestaltung dient der Erläuterung einer möglichen Umsetzung der Erfindung und soll nicht eingrenzend verstanden werden. Dabei zeigen:

Fig. 1:     Eine schematische Darstellung einer erfindungsgemäßen Vorrichung zum Polarisationsabgleich;

Fig. 2:     Ein Ausführungsbeispiel der Polarisationskompensationseinheit und des Detektionsmoduls.

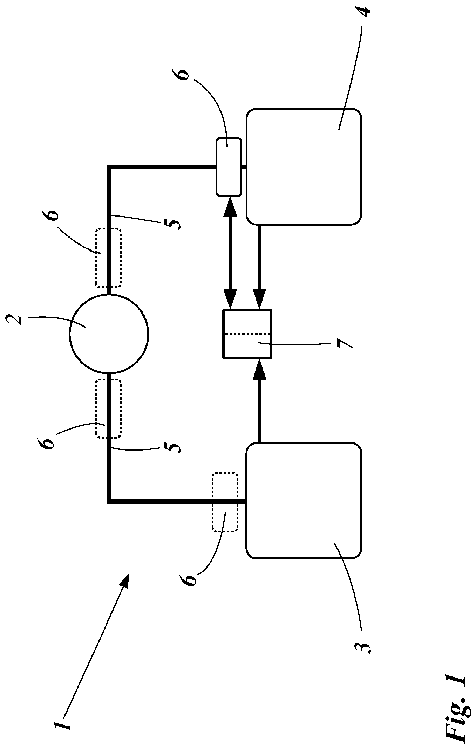

Fig. 1 zeigt eine schematische Darstellung der erfindungsgemäßen Vorrichtung 1 zum Polarisationsabgleich mit einer Quelle 2, einem ersten Detektionsmodule 3, einem zweiten Detektionsmodul 4, Quantenkanälen 5 zwischen der Quelle 2 und den Detektionsmodulen 3 und 4, einer Polarisationskompensationseinheit 6 (durchgezogene Linie) angeordnet in einen der Quantenkanälen 5 und einen Computer 7. Die Polarisationskompensationseinheit 6 mit gestrichelter Linie stellen alternative Anordnungen der Polarisationskompensationseinheit 6 dar.

Die Quelle 2 in Fig. 1 ist als verschränkte Photonenquelle ausgebildet und erzeugt in diesen Ausführungsbeispiel polarisations-verschränkte Photonenpaare mit jeweils einem Signal-Photon und einem Idler-Photon. Jeweils ein Photon jedes Paares wird durch den Quantenkanal 5 zum ersten Detektionsmodul 3 übertragen und das zweite Photon jedes Paares wird durch den Quantenkanal 5 zum zweiten Detektionsmodul 4 übertragen. Die Quantenkanäle 5 sind in diesen Ausführungsbeispiel als Fasern ausgebildet. Durch die Übertragung der Photonen in den Quantenkanälen 5 erfolgt eine unbekannte Polarisationsrotation.

Um die unbekannte Drehung der Polarisation auszugleichen ist in einem der Quantenkanälen 5 die Polarisationskompensationseinheit 6 angeordnet. Durch die Verwendung von polarisations-verschränkten Photonenpaaren ist es möglich die unbekannte Drehung der Polarisation in beiden Quantenkanälen 5 abzugleichen, d.h. dem ersten zwischen der Quelle 2 und dem ersten Detektionsmodul 3 und dem zweiten zwischen der Quelle 2 und dem zweiten Detektionsmodule 4. Dabei werden die Polarisationsbasen durch die Vorrichtung 1 beider Empfänger 3 und 4 aufeinander abgeglichen. Zum Abgleich der Polarisation zwischen den beiden Detektionsmodulen 3 und 4 ist die Polarisationskompensationseinheit 6 in einem Quantenkanal 5 angeordnet. Im Ausführungsbeispiel der Fig. 1 ist die Polarisationskompensationseinheit 6 vor dem zweiten Detektionsmodul 4 angeordnet. In dem ersten und zweiten Detektionsmodul 3 und 4 wird die Polarisation der polarisations-verschränkten Photonenpaare gemessen und die Ergebnisse an eine Logik 7 übermittelt.

Im Ausführungsbeispiel der Fig. 1 wird durch die Logik 7 die erfindungsgemäßen Algorithmen ausgeführt indem die Logik 7, die Messergebnisse des ersten und zweiten Detektionsmodule 3 und 4 erhält und auswertet wie in Fig. 1 durch die Pfeile zwischen dem ersten und zweiten Detektionsmodul 3 und 4 und der Logik 7 angedeutet, und die Einstellungen der Komponenten der Polarisationskompensationseinheit 6 auslesen und einstellen kann, wie in Fig. 1 durch den Doppelpfeil zwischen der Logik 7 und der Polarisationskompensationseinheit 6 angedeutet. Somit kann die Logik 7 die Einstellungen der Komponenten der Polarisationskompensationseinheit 6 vorgeben unter welchen eine Messung der verschränkten Photonenpaare durchgeführt wird und liest das Messergebnis in dem ersten und zweiten Detektionsmodul 3 und 4 aus. Danach können die Komponenten der Polarisationskompensationseinheit 6 durch die Logik 7 anhand des Algorithmus eingestellt werden, um die Polarisationsänderung bei der Übertragung der Photonen über die Quantenkanäle abzugleichen. In der Fig. 1 ist eine Logik 7 dargestellt, wobei bei räumlich getrennten Detektionsmodulen 3 die Messung der Photonen jeweils an einen eigenen Computer oder einer eigenen Logik 7 übermittelt werden, um für jedes Detektionsmodule 3 für jede Detektion einen Zeitstempel, die Basis in der die Messung durchgeführt wurde und die gemessene Polarisation zu erhalten. Dies ist für räumlich getrennte Detektionsmodule 3 in Fig. 1 durch die gestrichelte Linie in der Logik 7 angedeutet. Bei räumlich getrennten Computern oder Logiken 7 wird zur Bestimmung der Koinzidenzen der verschränkten Photonenpaare die Zeitstempel und die Basis in der die Messungen durchgeführt wurden zwischen den jeweiligen Computern oder Logiken 7 ausgetauscht.

Zur Einstellung der Komponenten der Polarisationskompensationseinheit 6 kann im Ausführungsbeispiel der Fig. 1 beispielsweise die Spannung an Flüssigkristall-Verzögerungsplatten eingestellt und ausgelesen werden.

Weiter sind in Fig. 1 weitere beispielhafte Anordnungen der Polarisationskompensationseinheit 6 gestrichelt dargestellt, d.h. vor dem ersten Detektionsmodul 3 und nach der Quelle 2 in Richtung des ersten und zweiten Detektionsmodul 3 und 4. Dabei ist erfindungsgemäß nur eine Polarisationskompensationseinheit 6 ausgebildet, wobei sich die optischen Komponenten der Polarisationskompensationseinheit 6 in einer speziellen Anordnung der Polarisationskompensationseinheit 6 ausgebildet sein können, oder die optischen Komponenten auf die verschiedenen Positionen der Polarisationskompensationseinheit 6 aufteilen können. Bei der Aufteilung verändert sich aber nicht die Anzahl der optischen Komponenten, nur die Position der Anordnung unterscheidet sich dabei.

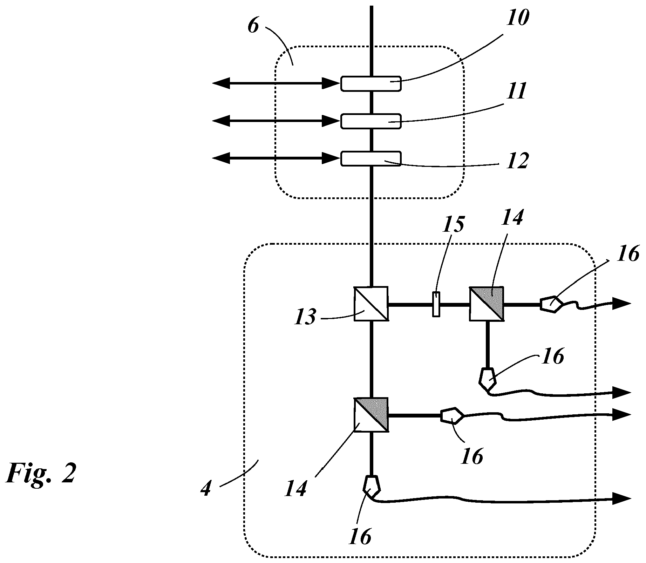

Fig. 2 zeigt ein Ausführungsbeispiel der Polarisationskompensationseinheit 6 und des zweiten Detektionsmoduls 4 aus der Fig. 1 im Detail. Die Polarisationskompensationseinheit 6 besteht in diesen Ausführungsbeispiel aus drei Flüssigkristall-Verzögerungsplatten, einer ersten Flüssigkristall-Verzögerungsplatte 10, einer zweiten Flüssigkristall-Verzögerungsplatte 11, und einer dritten Flüssigkristall-Verzögerungsplatte 12. Die Einstellung jeder der drei Flüssigkristall-Verzögerungsplatten kann über die Logik 7 (nicht dargestellt in Fig. 2) eingestellt und ausgelesen werden, wie in Fig. 2 durch die Doppelpfeile angedeutet.

Im Ausführungsbeispiel der Fig. 2 sind die schnellen Achsen der ersten, zweiten und dritten Flüssigkristall-Verzögerungsplatten 10, 11 und 12 unter einen Winkel von 0°, 45° und 0° angeordnet. Dabei bedeutet 0° eine Anordnung der schnellen Achse relativ zur horizontalen linearen Polarisation eines polarisierenden Strahlteilers vor einem Detektor im zweiten Detektionsmodul 4.

Das zweite Detektionsmodul 4 ist im Ausführungsbeispiel der Fig. 2 zur Messung der Polarisation der Photonen in den H/V und der D/A Basen ausgebildet. Dazu weist das zweite Detektionsmodul 4 einen Strahlteiler 13 auf, an dem die Photonen zufällig transmittiert oder reflektiert werden (50/50). Die transmittierten Photonen treffen auf einen ersten polarisierenden Strahlteiler 14 wodurch anhand der zwei Detektoren 16 im Ausgang des ersten polarisierenden Strahlteilers 14 Photonen mit horizontaler oder vertikaler Polarisation gemessen werden. Die reflektierten Photonen durchlaufen eine Halbwellenplatte 15 bei 22,5° wodurch eine Drehung der linearen Polarisation um 45° erhalten wird und durch den zweiten polarisierenden Strahlteiler 14 und die dahinter angeordneten Detektoren 16 Photonen in der diagonalen Polarisation und in der antidiagonalen Polarisation gemessen werden. Wenn ein Photon in einem der Detektoren 16 gemessen wird, wird das Detektionsergebnis im Ausführungsbeispiel der Fig. 2 an die Logik 7 (nicht dargestellt in Fig. 2) übermittelt, wie durch die Pfeile ausgehend von den Detektoren 16 angedeutet.

Bezugszeichenliste

1    Vorrichtung zum Polarisationsabgleich
2    Quelle
3    erstes Detektionsmodul
4    zweites Detektionsmodul
5    Quantenkanal
6    Polarisationskompensationseinheit
7    Logik

10   erste Flüssigkristall-Verzögerungsplatte
11   zweite Flüssigkristall-Verzögerungsplatte
12   dritte Flüssigkristall-Verzögerungsplatte
13   Strahlteiler
14   Polarisierender Strahlteiler
15   Halbwellenplatte
16   Detektor

**Patentansprüche**

1.  Verfahren zum Polarisationsabgleich, vorzugsweise für und/oder bei optischer Kommunikation, Quantenkryptographie und/oder Quanteninformatik,

    umfassend eine Quelle 2 zur Erzeugung polarisations-verschränkter Photonenpaare und zwei Detektionsmodule, wobei die Quelle 2 zur Übertragung der Photonen über jeweils einen Quantenkanal (5) mit den zwei Detektionsmodulen (3, 4) verbunden ist, und wobei jedes Detektionsmodul (3, 4) die Polarisation der Photonen in zwei nicht-orthogonalen Basen misst, und

umfassend eine Polarisationskompensationseinheit (6) zum Polarisationsabgleich der Polarisationsänderung bei der Übertragung der Photonen über die Quantenkanäle, wobei die Polarisationskompensationseinheit (6) mehrere optische Komponenten aufweist,

**dadurch gekennzeichnet,**

**dass** der Polarisationsabgleich durch einen Downhill-simplex Algorithmus und/oder durch einen deterministischen Algorithmus erfolgt, wobei für den Downhill-simplex Algorithmus Kontrollparameter in den Detektionsmodulen (3, 4) bei unterschiedlichen Einstellungen der optischen Komponenten gemessen werden, und

anhand des Downhill-simplex Algorithmus die Kontrollparameter minimiert und/oder maximiert werden, und die optischen Komponenten durch die Minimierung und/oder Maximierung der Kontrollparameter durch den Downhill-simplex Algorithmus eingestellt werden, um die Polarisationsänderung bei der Übertragung der Photonen über die Quantenkanäle abzugleichen, und/oder

für den deterministischen Algorithmus Kontrollparameter in den Detektionsmodulen bei unterschiedlichen Einstellungen der optischen Komponentengemessen werden, wobei die unterschiedlichen Einstellungen der optischen Komponenten durch den deterministischen Algorithmus vorgegeben werden, und

anhand der Messungen die Einstellungen der optischen Komponenten zum Polarisationsabgleich durch den deterministischen Algorithmus berechnet werden, und

die optischen Komponenten anhand des deterministischen Algorithmus eingestellt werden, um die Polarisationsänderung bei der Übertragung der Photonen über die Quantenkanäle abzugleichen.

2. Verfahren zum Polarisationsabgleich nach Anspruch 1,
   **dadurch gekennzeichnet,**
   **dass** die Polarisationskompensationseinheit (6) mindestens drei optische Komponenten aufweist.

3. Verfahren zum Polarisationsabgleich nach Anspruch 2,
   **dadurch gekennzeichnet,**
   **dass** die optischen Komponenten der Polarisationskompensationseinheit (6) als Flüssigkristall-Verzögerungsplatten (10, 11, 12) und/oder als Faser-Pressen (fiber-squeezer) ausgebildet sind.

4. Verfahren zum Polarisationsabgleich nach einem der Ansprüche 1 bis 3,
   **dadurch gekennzeichnet,**
   **dass** für den Downhill-simplex Algorithmus und/oder deterministischen Algorithmus vorgesehen ist, dass als Kontrollparameter die Koinzidenzen der Photonenpaare ermittelt werden und/oder die Visibility der Photonenpaare und/oder die Fidelity der Photonenpaare und/oder die Rate mit der ein gemeinsamer Schlüssel erzeugt wird und/oder die Quantenbitfehlerrate (Quantum Bit Error Rate QBER), oder auf derartigen Werten basierende Abwandlungen.

5. Verfahren zum Polarisationsabgleich nach einem der Ansprüche 1 bis 4,
   **dadurch gekennzeichnet,**
   **dass** für den Downhill-simplex Algorithmus und/oder deterministischen Algorithmus vorgesehen ist, dass die Einstellungen der Flüssigkristall-Verzögerungsplatten (10, 11, 12) als Teil der Polarisationskompensationseinheit (6) zur Messung der Kontrollparameter die Retardierung d (Verzögerung) und/oder die angelegte Spannung an eine oder mehrere der Flüssigkristall-Verzögerungsplatten ist, und/oder dass die Einstellungen der Faser-Pressen (fiber-squeezer) als Teil der Polarisationskompensationseinheit (6) zur Messung der Kontrollparameter die Retardierung $d$ (Verzögerung), und/oder Grad der Quetschung, und/oder Grad der Doppelbrechung, und/oder die angelegte Spannung an eine oder mehrere der Faser-Pressen (fiber-squeezer) ist.

6. Verfahren zum Polarisationsabgleich nach einem der Ansprüche 3 bis 5,
   **dadurch gekennzeichnet,**
   **dass** die Flüssigkristall-Verzögerungsplatten (10, 11, 12) und/oder Faser-Pressen (fiber-squeezer) eine Retardierung $d$ von 0 und $2\pi$ ermöglichen, vorzugsweise eine Retardierung $d$ von 0 und $> 2\pi$, höchste vorzugsweise von 0 und $> 4\pi$.

7. Verfahren zum Polarisationsabgleich nach einem der Ansprüche 1 bis 6,
   **dadurch gekennzeichnet,**

   **dass** das Verfahren mit dem Downhill-simplex Algorithmus vor und/oder während der Schlüsselerzeugung mit verschränkten Photonen bei Quantenkryptographie (QKD) erfolgt, und/oder

**dass** das Verfahren mit dem deterministischen Algorithmus vor der Schlüsselerzeugung mit verschränkten Photonen bei Quantenkryptographie (QKD) erfolgt.

8. Verfahren zum Polarisationsabgleich nach einem der Ansprüche 1 bis 7,
   **dadurch gekennzeichnet,**
   **dass** bei der Fehlerkorrektur (Error Correction) bei der Quantenkryptographie (QKD) der Inhalt der detektierten fehlerhaften Abschnitte ausgetauscht wird und der Inhalt dieser Abschnitte zusammen mit der Anzahl der nicht fehlerhaften Abschnitte zum Polarisationsabgleich genutzt wird, vorzugsweise daraus die Kontrollparameter ermittelt werden.

9. Verfahren zum Polarisationsabgleich nach einem der Ansprüche 3 bis 8, **dadurch gekennzeichnet,**
   **dass** die schnellen Achsen der Flüssigkristall-Verzögerungsplatten (10, 11, 12) und/oder der Faser-Pressen (fiber-squeezer) derart zueinander angeordnet sind, dass die erste und zweite Flüssigkristall-Verzögerungsplatte (10, 11) und/oder der Faser-Pressen (fiber-squeezer) die erste Basis und die zweite Basis beeinflussen, wenn die Spannung der ersten oder zweiten Flüssigkristall-Verzögerungsplatte (10, 11) und/oder der Faser-Pressen (fiber-squeezer) geändert wird, und dass die dritte Flüssigkristall-Verzögerungsplatte (12) und/oder der Faser-Presse (fiber-squeezer) nur die zweite Basis beeinflusst, wenn die Spannung der dritten Flüssigkristall-Verzögerungsplatte (12) und/oder der Faser-Presse (fiber-squeezer) geändert wird.

10. Verfahren zum Polarisationsabgleich nach einem der Ansprüche 3 bis 9,
    **dadurch gekennzeichnet,**
    **dass** der Downhill-simplex Algorithmus den Kontrollparameter in Abhängigkeit der Retardierung $d$ (Verzögerung) und/oder der Spannung der Flüssigkristall-Verzögerungsplatten minimiert oder maximiert.

11. Verfahren zum Polarisationsabgleich nach einem der Ansprüche 1 bis 10,
    **dadurch gekennzeichnet,**
    **dass** der deterministische Algorithmus zur Messung der Kontrollparameter feste Werte und/oder Wertebereiche für die unterschiedlichen Einstellungen der optischen Komponenten vorgibt.

12. Verfahren zum Polarisationsabgleich nach einem der Ansprüche 1 bis 11,
    **dadurch gekennzeichnet,**
    **dass** der deterministische Algorithmus eine $a \sin(d + b) + c$ förmigen Beziehung des Kontrollparameters zur Retardierung d aufweist.

13. Verfahren zum Polarisationsabgleich nach einem der Ansprüche 1 bis 12,
    **dadurch gekennzeichnet,**

    **dass** die Detektionsmodule (3, 4) die Messung der Photonen an einen Computer oder eine Logik (7) kommunizieren, und
    **dass** der Computer oder die Logik (7) die die Retardierung $d$ (Verzögerung) und/oder die angelegte Spannung an eine oder mehrere der Flüssigkristall-Verzögerungsplatten, und/oder die Retardierung $d$ (Verzögerung), und/oder Grad der Quetschung, und/oder Grad der Doppelbrechung, und/oder die angelegte Spannung an eine oder mehrere der Faser-Pressen (fiber-squeezer) ausliest und/oder steuert.

14. Vorrichtung zum Polarisationsabgleich, vorzugsweise zur Verwendung für optische Kommunikation, Quantenkryptographie und/oder Quanteninformatik, wobei die Vorrichtung eine Quelle 2, zwei Detektionsmodule (3, 4) und eine Polarisationskompensationseinheit (6) aufweist, und

    wobei die Quelle 2 polarisations-verschränkte Photonenpaare erzeugt, und wobei jedes Detektionsmodul (3, 4) die Polarisation der Photonen in zwei nicht-orthogonalen Basen misst, und
    wobei jedes Detektionsmodul (3, 4) zur Übertragung der Photonen über einen Quantenkanal (5) mit der Quelle 2 verbunden ist,
    **dadurch gekennzeichnet,**
    **dass** die Polarisationskompensationseinheit (6) mindestens drei optische Komponente aufweist um die Polarisationsänderung bei der Übertragung der Photonen über die Quantenkanäle abzugleichen und um den Polarisationsabgleich durch einen Downhill-simplex Algorithmus und/oder durch einen deterministischen Algorithmus durchzuführen,
    wobei die optischen Komponenten als Flüssigkristall-Verzögerungsplatten und/oder Faser-Pressen (fiber-squeezer) ausgebildet sind, und

**dass** die Flüssigkristall-Verzögerungsplatten und/oder Faser-Pressen (fiber-squeezer) vor und/oder in jeweils einem Detektionsmodul (3, 4) angeordnet sind, oder in der Quelle 2 vor einem oder aufgeteilt vor beiden Quantenkanälen angeordnet sind, oder in jeweils einem Quantenkanal (5) angeordnet sind, oder auf beide Quantenkanäle und/oder Detektionsmodule aufgeteilt angeordnet sind.

15. Vorrichtung zum Polarisationsabgleich nach Anspruch 14,
**dadurch gekennzeichnet,**
**dass** die schnellen Achsen der Flüssigkristall-Verzögerungsplatten und/oder der Faser-Pressen (fiber-squeezer) derart zueinander angeordnet sind, dass die erste und zweite Flüssigkristall-Verzögerungsplatte und/oder der Faser-Pressen (fiber-squeezer) die erste Basis und die zweite Basis beeinflussen, wenn die Spannung der ersten oder zweiten Flüssigkristall-Verzögerungsplatte und/oder der Faser-Pressen (fiber-squeezer) geändert wird, und dass die dritte Flüssigkristall-Verzögerungsplatte und/oder der Faser-Presse (fiber-squeezer) nur die zweite Basis beeinflusst, wenn die Spannung der dritten Flüssigkristall-Verzögerungsplatte und/oder der Faser-Presse (fiber-squeezer) geändert wird.

*Fig. 1*

Fig. 2

EP 4 239 946 A1

Europäisches Patentamt
European Patent Office
Office européen des brevets

# EUROPÄISCHER RECHERCHENBERICHT

**Nummer der Anmeldung**

EP 23 15 5125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 104 780 039 A (UNIV NINGBO) 15. Juli 2015 (2015-07-15) | 1-9,11, 13-15 | INV. H04L9/08 |
| A | * Zusammenfassung * * "Technical field" * * "Background technique" * * "Summary of the invention" * | 10,12 | |
| | ----- | | |
| A | COSTANTINO AGNESI ET AL: "Simple Quantum Key Distribution with qubit-based synchronization and a self-compensating polarization encoder", ARXIV.ORG, CORNELL UNIVERSITY LIBRARY, 201 OLIN LIBRARY CORNELL UNIVERSITY ITHACA, NY 14853, 27. September 2019 (2019-09-27), XP081484269, * Zusammenfassung * * Kapitel I: "Introduction" * * Kapitel II: "Setup" * | 1-15 | |
| | ----- | | **RECHERCHIERTE SACHGEBIETE (IPC)** |
| A | US 2020/204362 A1 (LI HONGWEI [GB] ET AL) 25. Juni 2020 (2020-06-25) * Zusammenfassung * * Absätze [0003] - [0007] * * Absätze [0053] - [0065] * | 1-15 | H04L |
| | ----- | | |

Der vorliegende Recherchenbericht wurde für alle Patentansprüche erstellt

| Recherchenort | Abschlußdatum der Recherche | Prüfer |
|---|---|---|
| München | 31. Mai 2023 | Di Felice, M |

**ANHANG ZUM EUROPÄISCHEN RECHERCHENBERICHT
ÜBER DIE EUROPÄISCHE PATENTANMELDUNG NR.**

EP 23 15 5125

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2023

| Im Recherchenbericht angeführtes Patentdokument | Datum der Veröffentlichung | Mitglied(er) der Patentfamilie | Datum der Veröffentlichung |
|---|---|---|---|
| CN 104780039 A | 15-07-2015 | KEINE | |
| US 2020204362 A1 | 25-06-2020 | CN 108432177 A | 21-08-2018 |
| | | EP 3335368 A1 | 20-06-2018 |
| | | US 2020204362 A1 | 25-06-2020 |
| | | WO 2017030532 A1 | 23-02-2017 |

EPO FORM P0461

Für nähere Einzelheiten zu diesem Anhang : siehe Amtsblatt des Europäischen Patentamts, Nr.12/82